# EUROPÄISCHE PATENTSCHRIFT

(11) **EP 0 949 057 B1**
(45) Veröffentlichungstag und Bekanntmachung des Hinweises auf die Patenterteilung: **05.01.2000**
(21) Anmeldenummer: 98102043.1
(22) Anmeldetag: 06.02.1998
(51) Int. Cl.: B29C 65/00

(54) **Andrückeinrichtung zum Verschweissen von Dichtungsbahnen**
Pressing element for welding of sealing webs
Dispositif de pressage pour le soudage de bandes d'étanchéité

(43) Veröffentlichungstag der Anmeldung: 13.10.1999
(73) Patentinhaber: Leister Process Technologies, 6060 Sarnen (CH)
(72) Erfinder: Niederberger, Adolf, 6056 Kägiswil (CH)
(74) Vertreter: Klocke, Peter, Dipl.-Ing.

(56) Entgegenhaltungen:
- CH-A- 507 083
- DE-U- 9 110 487
- DE-U- 9 110 488

## Beschreibung

Die vorliegende Erfindung betrifft einen Dichtungsbahn-Schweißautomat mit einem Fahrgestell und daran angeordneter Schweißeinrichtung, Führungsrollen, Antriebseinheit und Andrückeinrichtungen für die überlappend verschweißten Materialien, wobei die Andrückeinrichtungen mindestens eine Andrückrolle aufweisen, die auf einer über mindestens eine seitliche Halterung gehaltenen Welle gelagert ist und einen am Umfang als Andrücksfläche auf die Auflagefläche des Materials dienenden elastischen Mantels aufweist und von oben durch das Gewicht des Automaten die Schweißbahnen zusammenpresst.

Aus der DE 91 10 488 U1 ist eine Vorrichtung zum überlappenden Verschweißen von Folienrändern bekannt, bei der zwischen zwei Andrückrollen, die um eine quer zur Rollenachse und horizontal verlaufenden Schwenkachse verschwenkbar gelagert sind, die Folie hindurch geführt wird, um Unebenheiten der Folien auszugleichen. Der erforderliche Anpreßdruck der Andrückrollen wird durch die Andrückrollen selbst und nicht durch den Automaten erzeugt.

Zum Fügen und Schweißen von thermoplastischen Folien, Dichtungsbahnen, Planen und dergleichen hängt die Qualität der Schweißnaht von der Temperatur, dem Druck und der Geschwindigkeit, mit denen der Schweißvorgang durchgeführt wird, ab. Bei den bekannten Schweißautomaten und zugehörigen Andrückeinrichtungen, die den erforderlichen Anpreßdruck durch das Gewicht des Automaten von einer Seite auf die Schweißnaht erzeugen, wird eine Rolle mit einer starren Welle verwendet. Bei unebenem Untergrund wird die Fügekraft des Automaten ungleichmäßig auf die Breite der Schweißnaht bzw. rechts und links des Prüfkanals der Schweißnaht übertragen. Dem wurde in der Praxis dadurch versucht zu begegnen, daß ein zusätzlicher weichelastischer Mantel, beispielsweise Gummi oder Silikon, um die metallene Andrückrolle angeordnet wurde, um damit derartige Unebenheiten auszugleichen. Ab einer gewissen Höhe der Unebenheit bleibt es jedoch trotzdem nicht aus, daß die Andrückrolle keinen Druck mehr auf die Schweißnaht ausübt.

Der vorliegenden Erfindung liegt daher die Aufgabe zugrunde, eine Möglichkeit vorzuschlagen, mit der auch bei Unebenheiten trotzdem ein gleichmäßiger Anpreßdruck der Andrückrolle gewährleistet ist.

Diese Aufgabe wird durch einen Dichtungsbahn-Schweißautomaten und eine Andrückeinrichtung mit den Merkmalen des Anspruchs 1 bzw. 5 gelöst. Weitere vorteilhafte Ausgestaltungen sind den jeweiligen diesbezüglich rückbezogenen Unteransprüchen zu entnehmen.

Danach ist die Welle einseitig an dem Fahrgestell gehalten und die Andrückrolle über eine Pendellagerung auf der Welle gelagert, die zentrisch zu den Außenkanten der Andrückfläche angeordnet ist und eine zusätzliche Pendelbewegung der Andrückrolle gegenüber der Welle erlaubt, in dem sie um eine, die Rotationsachse im Rotationsmittelpunkt schneidende und parallel zur Stirnfläche der Welle verlaufende Schwenkachse schwenkbar ist. Dabei erlaubt die Art der Verbindung in Form einer Pendellagerung eine Pendelbewegung, um die Unebenheiten unter der Schweißbahn auszugleichen und trotzdem einen gleichmäßigen Druck über den Ausgleich des elastischen Mantels hinaus zu gewährleisten. Um eine über die gesamte Andrückfläche gleichmäßige Kraftverteilung zu gewährleisten ist die Pendellagerung zentrisch im Rotationsmittelpunkt angeordnet. Die Andrückrolle ist somit in der Lage, ihre Stellung relativ zu der Welle zu verändern und sich entsprechend den Bodenunebenheiten anzupassen. Sofern eine Andrückeinrichtung als Handgerät verwendet wird, kann bei schrägem Drücken das Gewicht trotzdem zentrisch parallel auf die Andrückfläche gebracht werden. Dies verbessert wesentlich auch bei diesen Geräten die Qualität der Schweißnaht. Des weiteren sind beidseitig des Pendellagers elastische Zentrierungsmittel angeordnet, die bei der Pendelbewegung der Andrückrolle als elastische Puffer und Anschlag dienen und die Bewegung auf einen bestimmten Schwenkbereich von cirka ± 4 Grad aus der Normallage beschränken. Zwischen dem Fahrgestell und der Stirnseite der Andrückrolle sind außerdem Stabilisierungseinrichtungen zur Führung der Andrückrolle parallel zum Fahrgestell angeordnet. Diese vermeiden, daß bei einem Schweißautomat die Andrückrolle eine Steuerfunktion übernimmt und den Schweißautomat von der Schweißnaht weglenkt. Dies kann beispielsweise durch Kugellager oder andere geeignete Mittel erfolgen, so daß die Rolle die gewünschte Schwenkbewegung entsprechend dem Boden oder lokale Unebenheit ausführen kann, jedoch immer gerade zum Fahrgestell verläuft.

Vorteilhafterweise werden die elastischen Zentrierungsmittel an einer Stirnseite über eine Spannscheibe und einer die Spannscheibe auf der Welle fixierenden Schraube gehalten. Damit kann auf einfache Weise insbesondere bei dem Dichtungsbahn-Schweißautomat eine Andrückrolle gegen eine andere Andrückrolle mit anderer Breite ausgetauscht werden.

Gemäß einer weiteren Ausbildung ist die Welle antreibbar und weist eine Mitnehmerhülse auf, die formschlüssig mit der Welle verbunden ist und am Umfang eine Mitnehmereinheit mit Pendelrollen verhalten aufweist. Diese Ausbildung erlaubt die besonders einfache Montage und Demontage der Andrückeinrichtung, in dem die einzelnen Teile axial auf die Antriebswelle aufgeschoben und daran anschließend stirnseitig mittels einer Spannscheibe und einer Schraube an der Welle fixiert werden.

Die Mitnehmereinheit weist gemäß einer Ausführungsform einen inneren mit der Welle verbundenen Zahnkranz und einen äußeren mit der Andrückrolle verbundenen Zahnkranz auf, wobei wenigstens die Zähne eines Zahnkranzes bogenförmig ausgebildet sind. Die drehfeste Mitnehmereinheit stellt die formschlüssige Verbindung zwischen der Welle und der Andrückrolle her und gewährleistet die pendelnde Bewegung der Andrückrolle.

Mittels der Erfindung ist es somit möglich, sowohl bei einem Schweißautomaten als auch einer Handandrückrolle sicherzustellen, daß bei schrägem Drücken trotzdem das Gewicht zentrisch parallel auf die Andruckfläche der Andrückrolle gelangt. Zusätzlich kann die Andrückrolle leicht ausgewechselt und durch eine andere, beispielsweise mit einer anderen Breite ersetzt werden.

Nachfolgend wird die Erfindung anhand von Ausführungsbeispielen näher erläutert.

Es stellen dar:
- Figur 1: die schematische Darstellung eines Schweißautomaten;
- Figur 2: die Schnittdarstellung durch eine Andrückeinrichtung an einem Schweißautomaten;
- Figur 3: eine Ansicht auf die Stirnseite der Andrückrolle der Andrückeinrichtung mit einem Teilschnitt durch die Mitnehmereinheit;
- Figur 4: eine vergrößerte Darstellung der Mitnehmereinheit gemäß Figur 2;
- Figur 5: die Draufsicht auf die Schweißbahnandrückeinrichtung gemäß Figur 2 mit Stabilisierungsinrichtung ohne Fahrgestell und Antriebsachse; und
- Figur 6: eine Handandrückrolle.

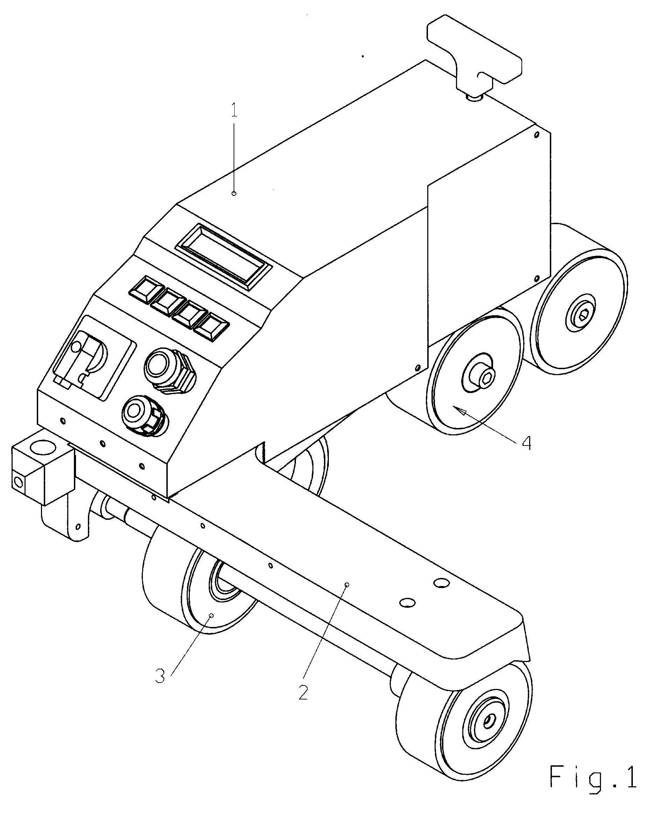

Figur 1 zeigt in schematischer Darstellung einen fahrbaren Dichtungsbahn-Schweißautomaten 1 mit einer in dem Gehäuse angeordneten Antriebseinheit und Steuereinrichtungen. Der Schweißautomat 1 weist außerdem eine Aufnahme 2 für eine nicht dargestellte Schweißeinrichtung sowie Transportrollen 3 und mindestens eine Antriebsrolle 4 auf, die gleichzeitig auch als Andrückeinrichtung wirkt.

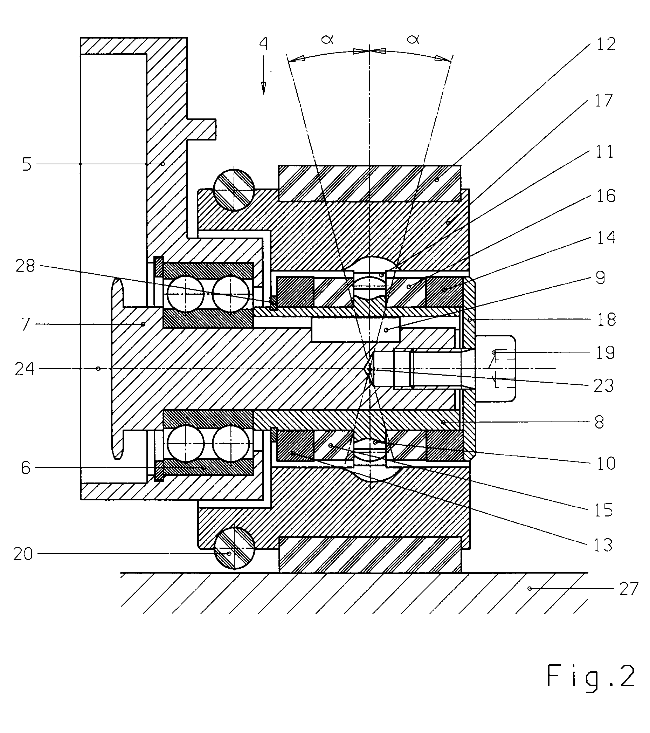

In der Figur 2 ist aus der Schnittaufstellung die Anordnung der Antriebsrolle 4 am Fahrgestell 5 des in Figur 1 dargestellten Automaten im Schnitt dargestellt. An dem Fahrgestell 5 ist über eine Wellenlagerung 6 die Antriebswelle 7 drehbar gelagert. Diese kann beispielsweise über einen nicht dargestellten Kettenantrieb innerhalb des Fahrgestells angetrieben werden. Auf der Antriebswelle 7 befindet sich im Anschluß an die Wellenlagerung 6 eine Mitnehmerhülse 8, die über einen Federkeil 9 mit der Antriebswelle 7 verspannt ist. Auf die Mitnehmerhülse 8 ist mit einem inneren Zahnkranz 10 versehen, der mit einem entsprechenden Zahnkranz 11 an der Andrückrolle 4 in formschlüssigem Eingriff steht. Um die Andrückrolle 4 mit den außen umlaufenden Gummiring 12 hinsichtlich der Seitenwände der Andrückrolle zu zentrieren, sind auf der Mitnehmerhülse 8 ein innerer und ein äußerer Stellring 13, 14 und ein innerer und äußerer Gummipufferring 15, 16 angeordnet und mit einem Sicherungsring 28 nach innen gesichert. Der innere Stellring 13 und der innere Gummipufferring 15 werden vor dem Einlegen der Mitnehmerhülse 8 auf dieser aufgebracht. Nach dem Einlegen der Mitnehmerhülse 8 kann die Andrückrolle 17 axial aufgeschoben werden. Im Anschluß daran erfolgt das Einlegen des äußeren Gummipufferring 16 und des äußeren Stellrings 14, die dann mit der Spannscheibe 18 und der Schraube 19 an der Antriebswelle 7 fest verbunden werden. Damit ist die Andrückrolle 17 auf einfache Weise montierbar und kann leicht gegen eine andere Breite ausgetauscht werden. Wie aus der Figur ersichtlich kann die Andrückrolle 17 relativ zu der Antrienswelle 7 eine Pendelbewegung um eine senkrecht aus der Zeichenebene heraus zeigenden Schwenkachse, die parallel zu der Stirnfläche der Antriebswelle 7 durch den Rotationsmittelpunkt verläuft. Die Rotationsachse 24 steht senkrecht auf dieser Stirnfläche.

Bei dem in Figur 2 dargestellten Ausführungsbeispiel ist die Andrückeinrichtung als Antriebsrolle 4 ausgebildet, die sich im wesentlichen aus der Andrückrolle 17 und der Verbindung zu der Antriebswelle 7 zusammensetzt. Die Andrückeinrichtung kann jedoch auch aus einer Antriebsrolle 17 bestehen, die nicht gleichzeitig als Antriebsrolle ausgebildet ist. Bei dieser, nicht dargestellten Ausführungsform wird die Welle 7 nicht angetrieben und die Antriebsrolle 17 läuft über eine Pendellagerung lediglich mit.

Die Andrückrolle 17 ist in diesem Ausführungsbeispiel über die durch den Gummiring 12 gebildete Andrückfläche auf den Boden 27 hinaus verbreitert, um in der stirnseitigen Ausnehmung den die Wellenlagerung 6 umfassenden Teil des Fahrgestells 5 und um am Umfang einen Rundriemen 20 für den Antrieb weiterer Einheiten aufzunehmen.

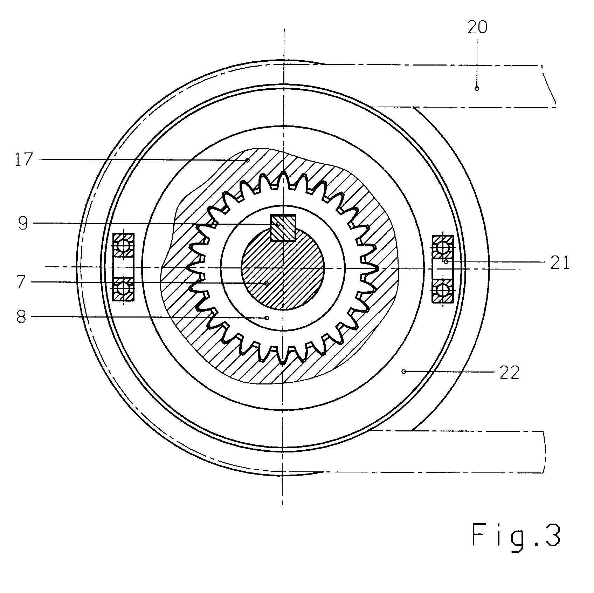

Figur 3 zeigt die Antriebsrolle 4 mit der Andrückrolle 17 aus einer anderen Ansicht. Hier ist die Verzahnung 10, 11 deutlich erkennbar. Um zu erreichen, daß die Andrückrolle 17 immer parallel zum Fahrgestell 5 verbleibt, sind am Fahrgestell Drehpunktauflagen 21 in Form von Kugellagern vorgesehen, die gegen die Stirnseite 22 der Andrückrolle 17 drücken.

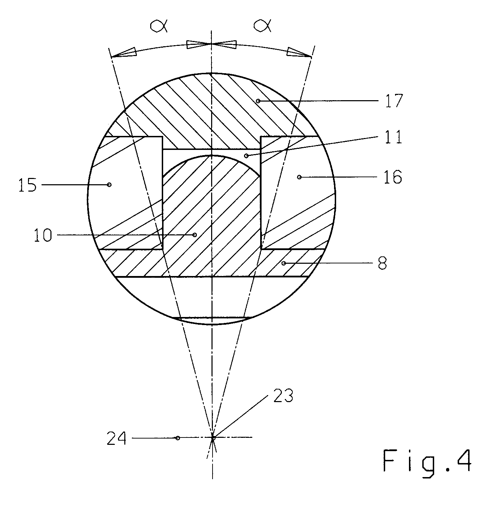

Figur 4 zeigt in der vergrößerten Darstellung den Pendelwinkel α, um den die Andrückrolle 17 sich bezüglich des Rotationspunktes 23 auf der Rotationsachse 24 bewegen kann. Aus dieser Figur ist ersichtlich, daß die an der Mitnehmerhülse 8 angebrachten Zähne 10 bogenförmig ausgebildet sind. Infolge dessen kann die Andrückrolle 17, unabhängig ob sie angetrieben ist oder nur mitläuft, um den Winkel α um eine senkrecht zur Zeichenebene durch den Rotationspunkt 23 verlaufende Schwenkachse pendeln und wird seitlich durch den inneren Gummipuffer 15 und den äußeren Gummipuffer 16 gebremst und elastisch aufgefangen.

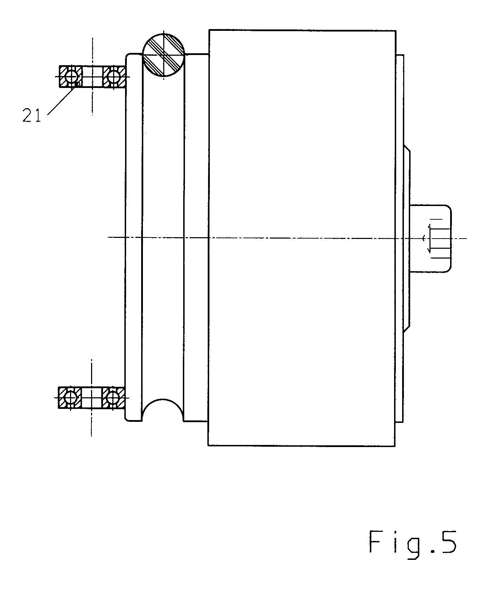

Figur 5 zeigt in der Draufsicht die Drehpunktauflagen 21, die gegen die Stirnseite der Andrückrolle 17 drücken.

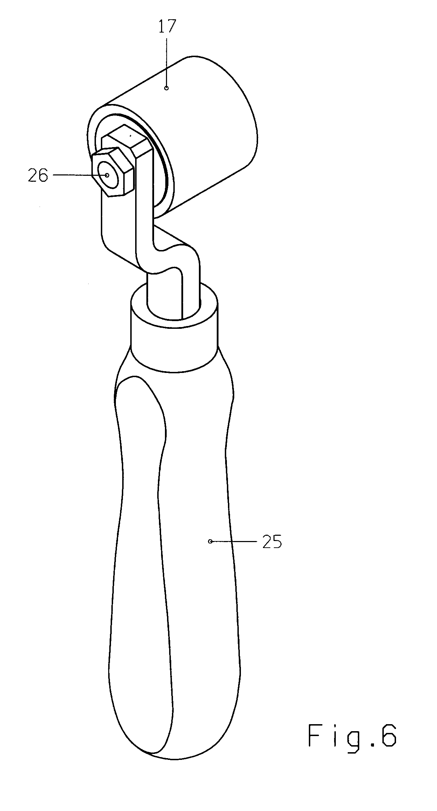

Figur 6 zeigt eine Handandrückrolle 25, bei der die Andrückrolle 17 hinsichtlich der Verbindung zu der Welle 26 entsprechend ausgestaltet ist, um damit bei einem Handschweißgerät, bei dem im Anschluß an den Schweißvorgang ein Andrücken von Hand erfolgen muß, eine optimale Krafteinwirkung auch bei schräger Einwirkung zu erreichen.

## Patentansprüche

1. Dichtungsbahn-Schweißautomat mit einem Fahrgestell und daran angeordneter Schweißeinrichtung, Transportrollen, Antriebseinheit und Andrückeinrichtungen für die überlappend verschweißten Materialien, wobei die Andrückeinrichtungen mindestens eine Andrückrolle aufweisen, die auf einer Welle gelagert ist und einen am Umfang als Andrückfläche auf die Auflagefläche des Materials dienenden elastischen Mantel aufweist und von oben durch das Gewicht des Automaten die Schweißbahnen zusammenpresst, **dadurch gekennzeichnet**, daß
die Welle (7) einseitig an dem Fahrgestell (5) gehalten ist;
die Andrückrolle (17) über eine Pendellagerung (10, 11) auf der Welle (7) gelagert ist, die zentrisch zu den Außenkanten der Andrückfläche angeordnet ist und eine zusätzliche Pendelbewegung der Andrückrolle gegenüber der Welle erlaubt, in dem sie um eine, die Rotationsachse (24) im Rotationsmittelpunkt (23) schneidende und parallel zur Stirnfläche der Welle verlaufende Schwenkachse schwenkbar ist;
auf der Welle (7) beidseitig der Pendellagerung (10, 11) elastische Zentrierungsmittel (15, 16) angeordnet sind; und
zwischen dem Fahrgestell (5) und der Stirnseite der Andrückrolle (17) eine Stabilisierungseinrichtung (21) zur Führung der Andrückrolle (17) parallel zum Fahrgestell angeordnet ist.

2. Dichtungsbahn-Schweißautomat nach Anspruch 1, **dadurch gekennzeichnet**, daß die elastischen Zentrierungsmittel (15, 16) an einer Stirnseite über eine Spannscheibe (18) und einer die Spannscheibe auf der Welle (7) fixierenden Schraube (19) gehalten werden.

3. Dichtungsbahn-Schweißautomat nach einem der vorangegangenen Ansprüche, **dadurch gekennzeichnet**, daß die Welle (7) antreibbar ausgebildet ist und eine Mitnehmerhülse (8) aufweist, die formschlüssig mit der Welle (7) verbunden ist und am Umfang eine Mitnehmereinheit (10) mit Pendelrollenverhalten aufweist.

4. Dichtungsbahn-Schweißautomat nach Anspruch 3, **dadurch gekennzeichnet**, daß die Mitnehmereinheit (10, 11) einen inneren, mit der Welle (7) verbundenen Zahnkranz (10) und einen äußeren mit der Andrückrolle (17) verbundenen Zahnkranz (11) aufweist, wobei wenigstens die Zähne eines Zahnkranzes (10) bogenförmig ausgebildet sind.

5. Andrückeinrichtung zum Andrücken von überlappend verschweißten Materialien indem von oben auf die Schweißbahnen ein notwendiger Anpreßdruck ausgeübt wird mit mindestens einer Andrückrolle, die über mindestens eine seitliche Halterung auf einer Welle gelagert ist und mit einem am Umfang als Andrückfläche auf die Auflagefläche des Materials dienenden elastischen Mantel aufweist, **dadurch gekennzeichnet**, daß
die Welle (7) einseitig gehalten ist;
die Andrückrolle (17) über eine Pendellagerung (10, 11) auf der Welle (7) gelagert ist, die zentrisch zu den Außenkanten der Andrückfläche angeordnet ist und eine zusätzliche Pendelbewegung der Andrückrolle gegenüber der Welle erlaubt, in dem sie um eine, die Rotationsachse (24) im Rotationsmittelpunkt (23) schneidende und parallel zur Stirnfläche der Welle verlaufende Schwenkachse schwenkbar ist; und
auf der Welle (7) beidseitig der Pendellagerung (10, 11) elastische Zentrierungsmittel (15, 16) angeordnet sind.

6. Andrückeinrichtung nach Anspruch 5, **dadurch gekennzeichnet**, daß die elastischen Zentrierungsmittel (15, 16) mindestens an einer Stirnseite über eine Spannscheibe (18) und einer die Spannscheibe auf der Welle (7) fixierenden Schraube (19) gehalten werden.

## Claims

1. An automatic welding machine for waterproof sheeting with a running gear and a welder mounted on it, conveyor rolls, a drive unit and pressing devices for the lap-welded materials, where the pressing devices have at least one press roll which is mounted on a shaft and has an elastic sheathing on the circumference that serves as a press surface for the contact surface of the material and presses the fusion welding sheeting from above due to the weight of the automatic welding machine, characterized in that
the shaft (7) is mounted on the running gear (5) at one end;
the press roll (17) is mounted by means of a pendulum bearing (10, 11) on the shaft (7), which is arranged so it is centered with respect to the outside edges of the press surface and permits an additional pendulum motion of the press roll with respect to the shaft in that it can be pivoted about a pivot axis that intersects the axis of rotation (24) at the mid point (23) of rotation and runs parallel to the end face of the shaft;
elastic centering means (15, 16) are arranged on the shaft (7) on both sides of the pendulum bearing (10, 11); and
a stabilization device (21) is arranged between the running gear (5) and the end face of the press roll (17) to guide the press roll (17) parallel to the running gear.

2. An automatic welding machine for waterproof sheeting according to Claim 1, characterized in that elastic centering means (15, 16) are held on one end face by a spring washer (18) and a bolt (19) which secures the spring washer on the shaft (7).

3. An automatic welding machine for waterproof sheeting according to one of the preceding claims, characterized in that the shaft (7) is designed so that it can be driven and it has an entraining sleeve (8) which is connected in a form-fitting manner to the shaft (7) and has an entraining unit (10) with a pendulum rolling behavior on the circumference.

4. An automatic welding machine for waterproof sheeting according to Claim 3, characterized in that the entraining unit (10, 11) has an internal crown gear (10) connected to the shaft (7) and an external crown gear (11) connected to the press roll (17), where at least the teeth of one crown gear (10) are designed with a curvature.

5. A pressing device for pressing lap-welded materials by exerting the required pressure on the fusion welding sheeting from above using at least one press roll which is mounted on a shaft by at least one side holder, and having an elastic sheathing on the circumference that serves as the press surface on the contact surface of the material, characterized in that
the shaft (7) is held at one end;
the press roll (17) is mounted by means of a pendulum bearing (10, 11) on the shaft (7) which is arranged centrally with the outside edges of the press surface and permits an additional pendulum movement of the press roll with respect to the shaft, in that it can be pivoted about a pivot axis that intersects the axis of rotation (24) at the mid point (23) of rotation and runs parallel to the end face of the shaft; and
elastic centering means (15, 16) are arranged on the shaft (7) on both sides of the pendulum mount (10, 11).

6. A pressing device according to Claim 5, characterized in that the elastic centering means (15, 16) are held at least on one end by a spring washer (18) and by a bolt (19) that secures the spring washer on the shaft (7).

## Revendications

1. Appareil de soudage automatique pour bandes d'étanchéité, comprenant un chariot et un dispositif de soudage monté sur celui-ci, des galets de transport, une unité d'entraînement et des dispositifs de pressage pour les matériaux soudés en chevauchement, les dispositifs de pressage présentant au moins un galet de pression monté sur un arbre, et une enveloppe élastique servant, en périphérie, de surface de pression sur la surface d'appui du matériau, et qui presse entre elles, du haut, les bandes à souder, par le poids de l'appareil automatique, caractérisé en ce que
l'arbre (7) est retenu d'un seul côté sur le chariot (5);
le galet de pression (17) est monté sur l'arbre (7) par le biais d'un montage à balancier (10, 11), qui est centré par rapport aux bords extérieurs de la surface d'appui et qui permet un mouvement pendulaire supplémentaire du galet de pression par rapport à l'arbre, en ce sens que ce galet peut pivoter autour d'un pivot coupant l'axe de rotation (24) au point central (23) de la rotation et orienté parallèlement à la face frontale de l'arbre;
des moyens de centrage élastiques (15, 16) sont disposés sur l'arbre (7), de part et d'autre du montage à balancier (10, 11);
entre le chariot (5) et la face frontale du galet de pression (17), on a placé un dispositif de stabilisation (21) destiné à guider le galet de pression (17) parallèlement au chariot.

2. Appareil de soudage automatique pour bandes d'étanchéité selon la revendication 1, caractérisé en ce que les moyens de centrage élastiques (15, 16) sont retenus sur une face frontale par l'intermédiaire d'une rondelle élastique bombée (18) et d'une vis (19) qui cale la rondelle élastique bombée sur l'arbre (7).

3. Appareil de soudage automatique pour bandes d'étanchéité selon l'une des revendications qui précèdent, caractérisé en ce que l'arbre (7) est entraîné et présente un manchon d'entraînement (8) qui est raccordé à l'arbre (7) par engagement positif et présente, en périphérie, une unité d'entraînement (10) se comportant à la manière de rouleaux articulés.

4. Appareil de soudage automatique pour bandes d'étanchéité selon la revendication 3, caractérisé en ce que l'unité d'entraînement (10, 11) présente une couronne dentée intérieure (10) raccordée à l'arbre (7), et une couronne dentée extérieure (11) raccordée au galet de pression (17), appareil dans lequel au moins les dents d'une couronne dentée (10) adoptent une forme d'arc.

5. Dispositif de pressage pour presser des matériaux soudés en chevauchement, en exerçant sur les bandes à souder, du haut, une pression de contact nécessaire avec au moins un galet de pression qui est monté sur un arbre par l'intermédiaire d'au moins un support latéral et qui présente une enveloppe élastique servant, en périphérie, de surface de pression sur la surface d'appui du matériau, caractérisé en ce que:
l'arbre (7) est retenu d'un seul côté;
le galet de pression (17) est monté sur l'arbre (7) par l'intermédiaire d'un montage à balancier (10, 11), qui est centré par rapport aux bords extérieurs de la surface de pression et qui autorise un mouvement pendulaire supplémentaire du galet de pression par rapport à l'arbre, en ce sens que ce galet peut pivoter autour d'un pivot coupant l'axe de rotation (24) au Point central de la rotation (23) et orienté parallèlement à la face frontale de l'arbre; et
des moyens de centrage élastiques (15, 16) sont prévus sur l'arbre (7), de part et d'autre du montage à balancier (10, 11).

6. Dispositif de pressage selon la revendication 5, caractérisé en ce que les moyens de centrage élastiques (15, 16) sont retenus au moins sur une face frontale, par une rondelle élastique bombée (18) et une vis (19) calant la rondelle élastique bombée sur l'arbre (7).
